# EUROPEAN PATENT APPLICATION

(11) **EP 4 339 557 A1**
(43) Date of publication of application: **20.03.2024**
(21) Application number: 22196162.6
(22) Date of filing: 16.09.2022
(51) Int. Cl.: G01C 21/16, G01C 25/00, G01C 21/00

(54) **A COMPUTER-IMPLEMENTED METHOD FOR INITIALIZING A LOCALIZATION SYSTEM FOR A VEHICLE**

(71) Applicant: Volvo Autonomous Solutions AB, 405 08 Göteborg (SE)
(72) Inventor: Chandru, Rajashekar, 413 19 Göteborg (SE); Berglind, Niclas, 413 19 Göteborg (SE)
(74) Representative: Valea AB

(57) **Abstract**

The disclosure relates to a computer-implemented method for initializing a localization system (1) for a vehicle (100), wherein the localization system (1) is using map data comprising a plurality of maps (M1,..., Mn) for localizing the vehicle (100) in an area (A), wherein the method comprises,
- associating (S1) map related information with a last available position (P1) of the vehicle (100) which was used by the localization system (1) before shutdown of the localization system (1), wherein the map related information comprises a unique identifier (map ID) for a first map (M1) of the plurality of maps which was used for localizing the vehicle (100) at the last available position (P1),
- at start-up of the localization system (1) with respect to the last available position (P1), loading (S2) a map from the plurality of maps (M1,..., Mn) for localizing the vehicle (100) at the last available position (P1) and verifying (S3) if the loaded map is the first map (M1) by using the unique identifier (map ID), and
- when it is verified that the first map (M1) is loaded, initializing (S4) the localization system (1) with the last available position (P1) in the first map (M1). The disclosure also relates to a localization system (1), a vehicle (100), a computer program and a computer readable medium.

## Description

### TECHNICAL FIELD

The disclosure relates to a computer-implemented method for initializing a localization system for a vehicle. The disclosure also relates to a localization system for a vehicle, a vehicle, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as wheel loaders, dump trucks, excavators, buses and passenger cars.

### BACKGROUND

Localization systems are used by vehicles, e.g., in particular by autonomous vehicles, to find a position when navigating an area e.g. with respect to a map. A localization system typically uses sensors for scanning the surroundings of a vehicle, and then uses the scan for deriving a new position of the vehicle. Sometimes communication with positioning satellites is also possible for triangulating a position of the vehicle. However, these options are not always available, especially when operating indoor and/or in mountainous areas.

When the vehicle has been shut down and need to start again, the localization system needs to be initialized with an initial position to start from.

The initial position will localize the vehicle with respect to a map. It is important that the vehicle is correctly localized in the area during the start-up procedure. If the localizing of the vehicle at start-up is incorrect, the navigating of the vehicle will be impaired, or the vehicle may not be able to start driving in the area.

Hence, there is an ongoing strive to achieve more robust, secure, and accurate positioning mechanisms for vehicles.

### SUMMARY

An object of the disclosure is to provide a computer-implemented method for initializing a localization system for a vehicle which alleviates at least one drawback of the prior art, or which at least provides a suitable alternative. Other objects of the disclosure are to provide a localization system, a vehicle, a computer program and a computer readable medium, which alleviate at least one drawback of the prior art, or which at least provides a suitable alternative.

According to a first aspect of the present disclosure, the object is achieved by a method according to claim 1.

Hence, there is provided a computer-implemented method for initializing a localization system for a vehicle, wherein the localization system is using map data comprising a plurality of maps for localizing the vehicle in an area. The method comprises,
- associating map related information with a last available position of the vehicle which was used by the localization system before shutdown of the localization system, wherein the map related information comprises a unique identifier for a first map of the plurality of maps which was used for localizing the vehicle at the last available position,
- at start-up of the localization system with respect to the last available position, loading a map from the plurality of maps for localizing the vehicle at the last available position and verifying if the loaded map is the first map by using the unique identifier, and
- when it is verified that the first map is loaded, initializing the localization system with the last available position in the first map.

A map as used herein is hence preferably a digital map used by a computer. A map may be defined as a representation of an area, such as showing relative positions of parts of the area.

By the provision of a method according to the first aspect of the disclosure, a more robust, secure, and accurate positioning of the vehicle is achieved. In particular, the present invention is based on a realization that it is advantageous for the localizing to verify that the correct map is used when starting up the localization system. If the correct map is not used, there is a risk that the initialization will be incorrect or fail. This may lead to consequential issues. For example, if the initialization is incorrect at start-up of the localization system, it may lead to that the vehicle deviates from an expected travelling path during driving. Consequently, the risk of collisions, such as with another vehicle and a vulnerable road user (VRU), will increase. It may also lead to that the vehicle eventually drives outside a road. This may damage the vehicle and/or lead to that the vehicle overturns if e.g. driving into a ditch.

As such, when using a plurality of different maps for localizing the vehicle in an area, it has been realized that verifying that the correct map is loaded is advantageous for ensuring a robust, secure, and accurate positioning of the vehicle.

Optionally, the map related information further comprises information about which sensor, or group of sensors, that was used during localizing of the vehicle at the last available position. Knowing which sensor that was used during localizing of the vehicle at the last available position implies further robust, secure, and accurate positioning of the vehicle. For example, the method further comprises,
- at start-up of the localization system with respect to the last available position, activating the sensor, or group of sensors, as indicated in the map related information. Thereby, by activating the same sensor, or group of sensors, as previously used, localizing of the vehicle at start-up can be performed with high confidence.

Optionally, the method further comprises:
- determining whether the vehicle has been stationary or not since the shutdown of the localization system, wherein initializing the localization system with the last available position in the first map is allowed when it also is determined that the vehicle has been stationary since the shutdown of the localization system. This implies a reduced risk that the vehicle is incorrectly localized at start-up of the localization system. Hence, a further robust, secure, and accurate positioning of the vehicle is achieved.

Still optionally, the method further comprises:
- when determining that the vehicle has not been stationary since the shutdown of the localization system, refraining from initializing the localization system with the last available position in the first map. Thereby, it can be avoided that the localization system uses an incorrect position for localizing the vehicle at start-up of the localization system. Hence, this implies a further robust, secure, and accurate positioning of the vehicle.

Optionally, determining whether the vehicle has been stationary or not since the shutdown of the localization system is performed using trip meter data of the vehicle. This implies an efficient, cost-effective and reliable procedure for determining whether the vehicle has been stationary or not since the shutdown of the localization system.

Optionally, the method further comprises:
- at start-up of the localization system, determining if a global navigation satellite system, GNSS, is available for determining a GNSS position for the vehicle for initializing the localization system in the loaded map, and when it is determined that the GNSS is available, initializing the localization system with the GNSS position in the loaded map. Thereby, when a GNSS position can be determined, localizing the vehicle with this position implies a more robust, secure and accurate positioning of the vehicle. For example, the localizing of the vehicle may thereby be determined with higher confidence since GNSS is typically a system which can localize a vehicle with high accuracy, if available and if the GNSS signal reception is proper.

Optionally, the method further comprises:
- at start-up of the localization system, determining if a user set position is available for initializing the localization system in the loaded map, and when it is determined that the user set position is available, initializing the localization system with the user set position in the loaded map. Still optionally, determining if the user set position is available is checked during a time period, wherein the method further comprises refraining from using a user set position if no user set position is made available during the time period. This implies that the time for localizing the vehicle during start-up of the localizing system is shortened.

Optionally, the map related information further comprises information indicative of at least one of weather conditions and a time of day when the first map was recorded. As such, the method may further comprise,
- at start-up of the localization system with respect to the last available position, initializing the localization system with the last available position in the first map when it is also determined that current weather conditions and/or a current time of day at the start-up of the localization system correspond(s) to the weather conditions and/or the time of day as indicated in the map related information. Thereby, a further robust, secure, and accurate positioning of the vehicle may be achieved. For example, changed weather and/or ambient light conditions implies that sensor information produced by environment perception sensors at the last available position will be different at start-up of the localization system compared to when the first map was recorded. Thus, if the conditions have changed, localizing the vehicle by use of the first map may result in impaired localizing. Accordingly, by also taking weather and/or the time of day into account, a more robust, secure, and accurate positioning of the vehicle may be achieved.

According to a second aspect of the disclosure, the object is achieved by a localization system for a vehicle according to claim 11.

Hence, there is provided a localization system for a vehicle, wherein the localization system is configured to perform the steps of the method according to any one of the embodiments of the first aspect of the disclosure.

Advantages and effects of the second aspect of the disclosure are largely analogous to the advantages and effects of the first aspect of the disclosure. It shall also be noted that all embodiments of the first aspect of the disclosure are applicable to and combinable with all embodiments of the second aspect of the disclosure, and vice versa.

Optionally, the localization system comprises a sensor, or a group of sensors, for localizing the vehicle in an area. The sensor, or group of sensors, may be any one of a light detection and ranging (LIDAR) sensor, a radio detection and ranging (RADAR) sensor, a sound navigation and ranging (SONAR) sensor, a camera and an ultrasonic sensor. The sensor, or group of sensors, for localizing the vehicle in the area is/are used together with map data, i.e. measurements from the sensor(s) may be processed and matched with map data for localizing the vehicle in the area.

According to a third aspect of the disclosure, the object is achieved by a vehicle according to claim 13.

Hence, there is provided a vehicle comprising the localization system according to any one of the embodiments of the second aspect of the disclosure.

According to a fourth aspect of the disclosure, the object is achieved by a computer program according to claim 14.

Hence, there is provided a computer program comprising program code means for performing the steps of any of the embodiments of the first aspect of the disclosure when said program is run on a computer.

According to a fifth aspect of the disclosure, the object is achieved by a computer readable medium according to claim 15.

Hence, there is provided a computer readable medium carrying a computer program comprising program code means for performing the steps of any of the embodiments of the first aspect of the disclosure when said program product is run on a computer.

Further advantages and advantageous features of the disclosure are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the present disclosure,
Fig. 2 is a schematic illustration of a localization system according to an example embodiment of the present disclosure,
Fig. 3 is a schematic illustration of a vehicle which is operating in an area,
Fig. 4 is a flowchart of a computer-implemented method according to example embodiments of the present disclosure, and
Fig. 5 is a flowchart of a computer-implemented method according to example embodiments of the present disclosure.

It shall be understood that the embodiments shown and described are exemplifying and that the invention is not limited to these embodiments. It shall also be noted that some details in the drawings may be exaggerated in order to better describe and illustrate specific embodiments of the disclosure. Like reference characters throughout the drawings refer to the same, or similar, type of element unless expressed otherwise.

### DETAILED DESCRIPTION OF EXAMPLE EMBODIMENTS OF THE INVENTION

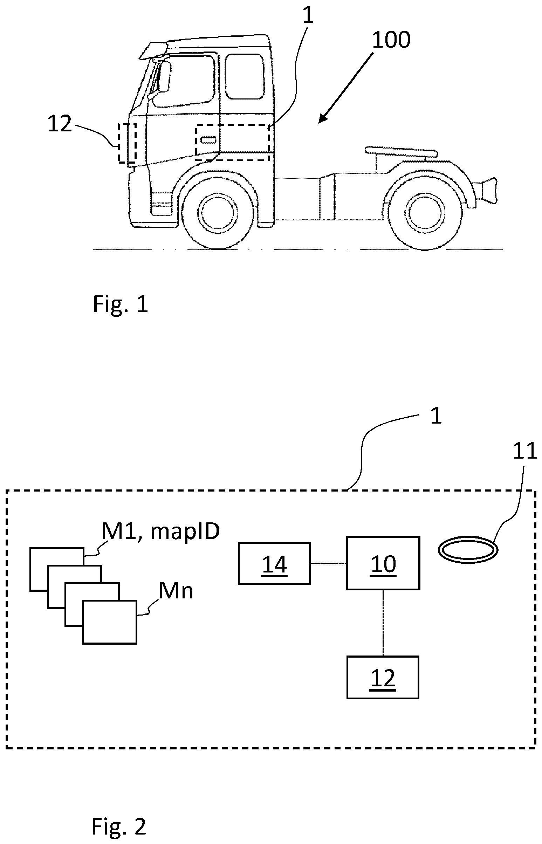

Fig. 1 depicts a vehicle 100 according to an example embodiment of the disclosure. The vehicle 100 is in this example a truck, and more particularly a towing truck for towing one or more trailers (not shown). It shall however be noted that embodiments of the disclosure are not only limited to this type of vehicle but may also be used for other vehicles, such as buses, passenger cars and construction equipment, including but not limited to wheel loaders, dump trucks and excavators. The vehicle 100 may be an autonomous vehicle, i.e. a self-driving vehicle. Thus, the vehicle 100 may comprise one or more actuators (not shown) for automatically controlling at least one of steering, braking and propulsion of the vehicle 100.

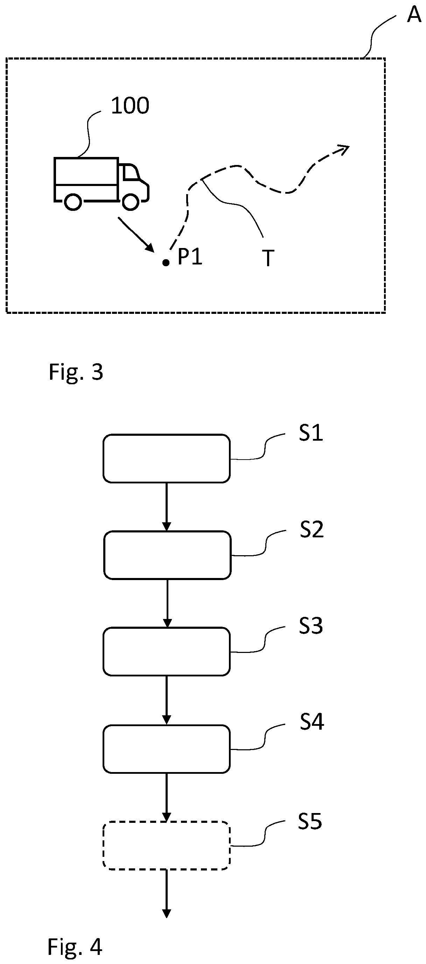

The vehicle 100 as shown in fig. 1 comprises a localization system 1, such as a localization system 1 as shown in fig. 2. Fig. 2 depicts a schematic view of a localization system 1 for localizing the vehicle 100 in an area A, see fig. 3. which depicts a schematic illustration of an area A. By localizing is herein meant to determine a position, or pose, of the vehicle 100 in the area A with respect to a reference. A pose may be defined as a position and an orientation of the vehicle 100 with respect to a reference. The reference may be at least one of the herein disclosed maps.

Fig. 4 depicts a flowchart of a computer-implemented method according to example embodiments of the disclosure. The method is used for initializing a localization system 1 for a vehicle 100. The localization system may be a localization system 1 as shown in figs. 1 and 2. The vehicle may be a vehicle 100 as shown in fig. 1 and fig. 3.

As shown in fig. 2, the localization system 1 may comprise a control unit 10 which is configured to perform a method as disclosed herein. The localization system 1 may further comprise a sensor 12, or a group of sensors, for localizing the vehicle 100 in the area A. For example, the sensor 12, or group of sensors, may be configured to scan the area A and compare, or match, the scan with a map for localizing the vehicle 100. The area A, which is schematically depicted in fig. 3 may e.g. be a defined area, such as a confined area. For example, the area A may be a logistics center, a construction site, a mining site, a harbour, etc.

The sensor 12, or group of sensors, may be at least one of a LIDAR sensor, a RADAR sensor, a SONAR sensor, a camera and an ultrasonic sensor. As shown in fig. 1, the sensor 12, or group of sensors, may be provided on the vehicle 100, such as at a front portion of the vehicle 100.

The localization system 1 may further comprise a storage unit 14 for storing a plurality of maps M1,..., Mn which are used by the localization system 1 for localizing the vehicle 100 in the area A. The plurality of maps M1,..., Mn may for example be maps of different portions of the area A, maps which have been recorded at different times and/or in different weather conditions, maps which have been recorded by use of a sensor 12 on the vehicle 100 when driving in the area A, and/or maps which have been recorded by other entities, such as by other vehicles (not shown) driving in the area A. Accordingly, by way of example, the localization system 1 may be configured to use different maps depending e.g. on current circumstances when the vehicle 100 is driving in the area A. For example, different types of maps may be used depending on at which time the vehicle 100 is driving in the area A, present weather conditions, where in the area A the vehicle 100 is driving, etc. A map may be recorded by use of any type of sensor as mentioned herein, e.g. by at least one environment perception sensor, such by the above-mentioned LIDAR sensor, RADAR sensor, SONAR sensor, camera and ultrasonic sensor.

The storage unit 14 is preferably an electronic storage unit, such as an electronic memory of any known type. It shall however be noted that the plurality of maps M1,..., Mn may additionally, or alternatively, be stored in a remote storage unit (not shown) which is in communicative contact with the localization system 1.

The control unit 10 may include a microprocessor, microcontroller, programmable digital signal processor or another programmable device. The control unit 10 may also, or instead, include an application specific integrated circuit, a programmable gate array or programmable array logic, a programmable logic device, or a digital signal processor. Where the control unit 10 includes a programmable device such as the microprocessor, microcontroller or programmable digital signal processor mentioned above, the processor may further include computer executable code that controls operation of the programmable device. The control unit 10 may comprise embedded hardware, sometimes with integrated software. Further, the control unit 10 may be any kind of control unit, and it may also comprise more than one control unit, i.e. the control unit may be configured by two or more sub-control units, which may be provided close to each other or be separated from each other. In some embodiments, the control unit 10 may be denoted a computer. The control unit 10, the sensor 12 and the storage unit 14 are configured to communicate with each other by use of wired and/or wireless communication means.

With reference to e.g. figs. 1-4, the method comprises:
S1: associating map related information with a last available position P1 of the vehicle 100 which was used by the localization system 1 before shutdown of the localization system 1, wherein the map related information comprises a unique identifier mapID for a first map M1 of the plurality of maps which was used for localizing the vehicle 100 at the last available position P1.

The unique identifier mapID may for example be a unique number, or name, for the first map M1 which was used for localizing the vehicle 100 at the last available position P1. The last available position P1 may for example be a position expressed in a Cartesian coordinate system, or by any other reference system.

The method further comprises:
- at start-up of the localization system 1 with respect to the last available position P1,
   S2: loading a map from the plurality of maps M1,..., Mn for localizing the vehicle 100 at the last available position P1, and
   S3: verifying if the loaded map is the first map M1 by using the unique identifier mapID, and
- when it is verified that the first map M1 is loaded,
S4: initializing the localization system 1 with the last available position P1 in the first map M1.

Initializing thus means to initialize the localization system 1 with an initial position P1 to start from. When the localization system 1 is initialized with the last available position P1 in the first map M1, the method may further comprise localizing the vehicle 100 in the area while driving along a travelling path T. The travelling path T may be a predetermined travelling path. For example, the travelling path T may be a path for conducting a mission in the area A, such as moving a load from one point to another point in the area A.

During operation, i.e. when the vehicle 100 is driving in the area A, such as along the travelling path T, the localization system 1 may utilize simultaneous localization and mapping (SLAM). This means that the localization system 1 may be adapted to localize the vehicle 100 in the area A and simultaneously record a map of the area A during operation.

The method may be implemented as a computer program 11 comprising program code means for performing the method when said program is run on the control unit 10. The invention also relates to a computer readable medium carrying a computer program 11 comprising program code means for performing the method when said program product is run on the control unit 10.

The map related information may further comprise information about which sensor 12, or group of sensors, that was used during localizing of the vehicle 100 at the last available position P1. Thereby, the method may further comprise,
- at start-up of the localization system 1 with respect to the last available position P1, S5: activating S5 the sensor 12, or group of sensors, as indicated in the map related information.

S5 is an optional step, which is depicted as a box with dashed lines in fig. 4.

Additionally, or alternatively, the method may comprise:
- determining whether the vehicle 100 has been stationary or not since the shutdown of the localization system 1, wherein initializing the localization system 1 with the last available position P1 in the first map M1 is allowed when it also is determined that the vehicle 100 has been stationary since the shutdown of the localization system 1.

Additionally, the method may comprise:
- when determining that the vehicle 100 has not been stationary since the shutdown of the localization system 1, refraining from initializing the localization system 1 with the last available position P1 in the first map M1.

Determining whether the vehicle 100 has been stationary or not since the shutdown of the localization system 1 may for example be performed using trip meter data of the vehicle 100.

Additionally, or alternatively, the method may comprise:
- at start-up of the localization system 1, determining if a global navigation satellite system, GNSS, is available for determining a GNSS position for the vehicle 100 for initializing the localization system 1 in the loaded map, and when it is determined that the GNSS is available, initializing the localization system with the GNSS position in the loaded map.

Additionally, or alternatively, the method may comprise:
- at start-up of the localization system 1, determining if a user set position is available for initializing the localization system 1 in the loaded map, and when it is determined that the user set position is available, initializing the localization system 1 with the user set position in the loaded map.

Determining if the user set position is available may for example be checked during a time period. Hence, the method may further comprise refraining from using a user set position if a result of the determining indicates that no user set position is made available during the time period.

Additionally, or alternatively, the map related information may further comprise information indicative of at least one of weather conditions and a time of day when the first map M1 was recorded. Hence, the method may comprise,
- at start-up of the localization system 1 with respect to the last available position P1, S4: initializing the localization system 1 with the last available position P1 in the first map M1 when it is also determined that current weather conditions and/or a current time of day at the start-up of the localization system 1 correspond(s) to the weather conditions and/or the time of day as indicated in the map related information.

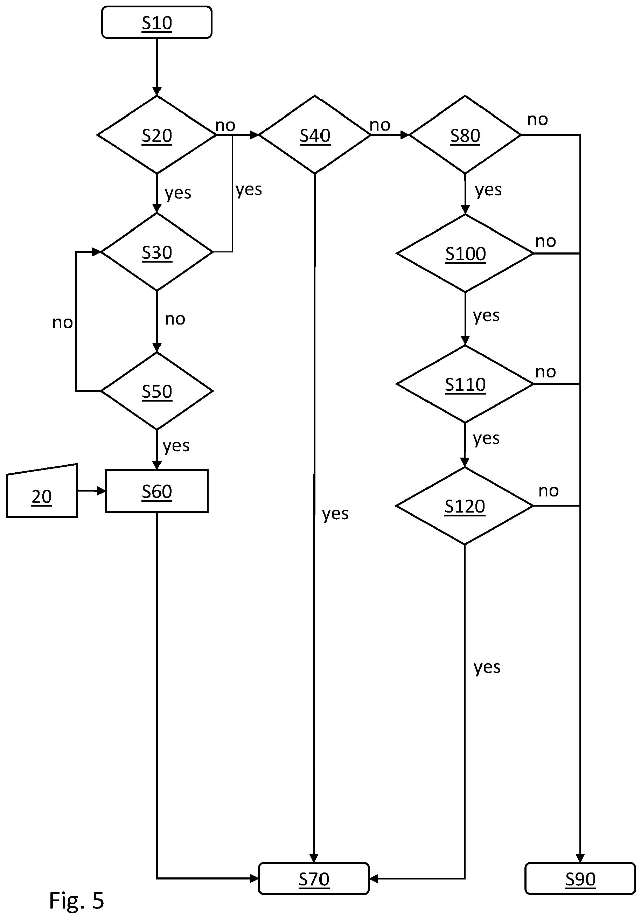

Fig. 5 depicts a flowchart of a computer-implemented method according to example embodiments of the disclosure.

The method starts in S10 where a map is loaded from a plurality of maps M1,..., Mn at start-up of the localization system 1.

In S20 it is determined if the localization system 1 is configured and/or allowed to localize the vehicle 100 with a user set position. For example, the localization system 1 may be configured to initialize with a user set position only when certain conditions are fulfilled. For example, a condition may be that the vehicle 100 was shut down in a specific portion of the area A. The specific portion of the area A may thus be defined in the map data.

If "yes", the method continues to S30. S30 defines a time period at which it is checked whether a user set position is available. If the time period is exceeded, "yes", the method continues to S40. If a user set position is not exceeded, "no", the method continues to S50.

In S50 it is determined if a user set position is available for initializing the localization system 1 in the loaded map. If "no", the method continues to S30 again. If a user set position is available, "yes", the method continues to S60 where the user set position is received from a user input 20. The user input 20 may be obtained via for example be a human machine interface (HMI), such as a keyboard, a touch screen, etc.

Thereafter, the method continues to S70 where the localization system 1 initializes with the user set position in the loaded map.

If it is determined in S20 that the localization system 1 is not configured and/or allowed to localize the vehicle 100 with a user set position, "no", or if the time period in S30 is exceeded, "yes", the method continues to S40. In S40 it is determined if a GNSS position is available. If "yes", the method continues to S70 where the localization system 1 initializes with the GNSS position in the loaded map.

If no GNSS position is available, "no", the method continues from S40 to S80 where it is determined if a last available position P1 is available which was used by the localization system 1 before shutdown of the localization system 1. The last available position P1 may for example be saved in the above-mentioned storage unit 14. If no last available position P1 is available, "no", the method continues to S90 where it is determined that the initialization failed. If the initialization failed, the localization system 1 may be configured to issue a warning signal indicative of that the initialization failed.

If it is determined that a last available position P1 is available which was used by the localization system 1 before shutdown of the localization system 1, "yes", the method continues to S100. In S100 it is verified if the loaded map is the first map M1 which was used for localizing the vehicle 100 at the last available position P1. This is done by using the unique identifier mapID as mentioned in the above. If the verification is negative, "no", the method continues to S90. If the verification is positive, "yes", the method continues to S110.

In S110 it is determined whether the vehicle 100 has been stationary or not since the shutdown of the localization system 1. If the vehicle 100 has not been stationary, "no", the method continues to S90. If the vehicle 100 has been stationary, "yes", the method continues to S120.

In S120, it is determined if the localization system 1 can localize the vehicle 100 with the last available position P1. If the localization system 1 for some reason cannot localize with the last available position P1, the method continues to S90. However, if the localization system 1 can localize with the last available position P1, the method continues to S70 where the localization system 1 initializes with the last available position P1 in the first map M1.

It is to be understood that the present invention is not limited to the embodiments described above and illustrated in the drawings; rather, the skilled person will recognize that many changes and modifications may be made within the scope of the appended claims.

## Claims

1. A computer-implemented method for initializing a localization system (1) for a vehicle (100), wherein the localization system (1) is using map data comprising a plurality of maps (M1,..., Mn) for localizing the vehicle (100) in an area (A), wherein the method comprises,
- associating (S1) map related information with a last available position (P1) of the vehicle (100) which was used by the localization system (1) before shutdown of the localization system (1), wherein the map related information comprises a unique identifier (map ID) for a first map (M1) of the plurality of maps which was used for localizing the vehicle (100) at the last available position (P1),
- at start-up of the localization system (1) with respect to the last available position (P1), loading (S2) a map from the plurality of maps (M1,..., Mn) for localizing the vehicle (100) at the last available position (P1) and verifying (S3) if the loaded map is the first map (M1) by using the unique identifier (map ID), and
- when it is verified that the first map (M1) is loaded, initializing (S4) the localization system (1) with the last available position (P1) in the first map (M1).

2. The method according to claim 1, wherein the map related information further comprises information about which sensor (12), or group of sensors, that was used during localizing of the vehicle (100) at the last available position.

3. The method according to claim 2, wherein the method further comprises,
- at start-up of the localization system (1) with respect to the last available position, activating (S5) the sensor (12), or group of sensors, as indicated in the map related information.

4. The method according to any one of the preceding claims, further comprising,
- determining whether the vehicle (100) has been stationary or not since the shutdown of the localization system (1), wherein initializing the localization system (1) with the last available position in the first map (M1) is allowed when it also is determined that the vehicle (100) has been stationary since the shutdown of the localization system (1).

5. The method according to claim 4, wherein the method further comprises,
- when determining that the vehicle (100) has not been stationary since the shutdown of the localization system (1), refraining from initializing the localization system (1) with the last available position (P1) in the first map (M1).

6. The method according to any one of claims 4 or 5, wherein determining whether the vehicle (100) has been stationary or not since the shutdown of the localization system (1) is performed using trip meter data of the vehicle (100).

7. The method according to any one of the preceding claims, further comprising,
- at start-up of the localization system (1), determining if a global navigation satellite system, GNSS, is available for determining a GNSS position for the vehicle (100) for initializing the localization system (1) in the loaded map, and when it is determined that the GNSS is available, initializing the localization system with the GNSS position in the loaded map.

8. The method according to any one of the preceding claims, further comprising,
- at start-up of the localization system (1), determining if a user set position is available for initializing the localization system (1) in the loaded map, and when it is determined that the user set position is available, initializing the localization system (1) with the user set position in the loaded map.

9. The method according to claim 8, wherein determining if the user set position is available is checked during a time period, wherein the method further comprises refraining from using a user set position if no user set position is made available during the time period.

10. The method according to any one of the preceding claims, wherein the map related information further comprises information indicative of at least one of weather conditions and a time of day when the first map (M1) was recorded, wherein the method further comprises,
- at start-up of the localization system (1) with respect to the last available position (P1), initializing (S4) the localization system with the last available position (P1) in the first map (M1) when it is also determined that current weather conditions and/or a current time of day at the start-up of the localization system (1) correspond(s) to the weather conditions and/or the time of day as indicated in the map related information.

11. A localization system (1) for a vehicle (100), wherein the localization system (1) is configured to perform the steps of the method according to any one of the preceding claims.

12. The localization system (1) according to claim 11, comprising a sensor (12), or a group of sensors, for localizing the vehicle (100) in an area (A).

13. A vehicle (100) comprising the localization system (1) according to any one of claims 11-12.

14. A computer program comprising program code means for performing the steps of any of claims 1-10 when said program is run on a computer (10).

15. A computer readable medium carrying a computer program comprising program code means for performing the steps of any of claims 1-10 when said program product is run on a computer (10).
